(19) Europäisches Patentamt
European Patent Office
Office européen des brevets

(11) **EP 2 705 462 B1**

(12) **EUROPÄISCHE PATENTSCHRIFT**

(45) Veröffentlichungstag und Bekanntmachung des Hinweises auf die Patenterteilung:
**17.08.2016   Patentblatt 2016/33**

(51) Int Cl.:
***G06K 7/10*** *(2006.01)*

(21) Anmeldenummer: **12720415.4**

(22) Anmeldetag: **30.04.2012**

(86) Internationale Anmeldenummer:
**PCT/EP2012/001863**

(87) Internationale Veröffentlichungsnummer:
**WO 2012/150025 (08.11.2012 Gazette 2012/45)**

(54) **LESEGERÄT ZUR KONTAKTLOSEN KOMMUNIKATION MIT EINER TRANSPONDEREINHEIT**

READING DEVICE FOR CONTACTLESS COMMUNICATION WITH A TRANSPONDER UNIT

LECTEUR POUR LA COMMUNICATION SANS CONTACT AVEC UNE UNITÉ DE TRANSPONDEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2011   DE 102011100296**

(43) Veröffentlichungstag der Anmeldung:
**12.03.2014   Patentblatt 2014/11**

(73) Patentinhaber: **Giesecke & Devrient GmbH
81677 München (DE)**

(72) Erfinder: **FINKENZELLER, Klaus
85774 Unterföhring (DE)**

(56) Entgegenhaltungen:
**EP-A1- 2 105 862       EP-A2- 1 901 202
US-A1- 2004 256 460       US-A1- 2005 212 673**

**Beschreibung**

Die Erfindung betrifft ein Lesegerät zur kontaktlosen Kommunikation mit einer Transpondereinheit sowie ein Verfahren zum Betrieb eines Lesegeräts.

Im Rahmen der kontaktlosen Kommunikation zwischen einem Lesegerät und einer Transpondereinheit wird durch das Lesegerät ein magnetisches Wechselfeld erzeugt, über welches das Lesegerät Informationen an die Transpondereinheit übermitteln kann bzw. eine Transpondereinheit Informationen an das Lesegerät übertragen kann. Zur Informationsübertragung von der Transpondereinheit hin zum Lesegerät sind Verfahren zur passiven und zur aktiven Lastmodulation bekannt. Bei der passiven Lastmodulation wird die Last einer im Lesegerätfeld eingebrachten Transpondereinheit verändert, was zu einer Modulation des Lesegerätfelds führt, die über das Lesegerät detektiert werden kann. Dabei wird aktiv kein Signal von der Transpondereinheit ausgesendet. Im Unterschied hierzu erzeugt eine Transpondereinheit bei der aktiven Lastmodulation ein eigenes moduliertes Feld, welches zur Datenübermittlung dient. Das modulierte Feld ist dabei derart ausgestaltet, dass es vom Lesegerät wie die Modulation seines eigenen Feldes im Falle einer passiven Lastmodulation ausgewertet werden kann. In der Druckschrift WO 2006/000446 A1 wird das Verfahren der aktiven Lastmodulation detailliert beschrieben.

In der Druckschrift DE 10 2004 057 266 A1 ist ein Kommunikationsgerät zur kontaktlosen Kommunikation mit einem Transponder beschrieben, wobei das Kommunikationsgerät in einem Kommunikationsmodus oder in einem Detektionsmodus betrieben werden kann. Im Detektionsmodus wird die Anwesenheit eines Transponders in einem definierten Gebiet erfasst, wohingegen im Kommunikationsmodus Kommunikationssignale zur Kommunikation mit dem Transponder ausgesendet werden. Dabei werden im Detektionsmodus Detektionssignale mit geringerer Sendeleistung als die Kommunikationssignale im Kommunikationsmodus ausgesendet.

In dem Dokument WO 03/069538 A1 ist eine Schaltvorrichtung gezeigt, welche über einen Transponder betätigbar ist. Die Schaltvorrichtung umfasst einen Schwingkreis, über den das Annähern eines Transponders aufgrund einer Frequenzänderung in dem Schwingkreis festgestellt wird.

Mittels der eingangs beschriebenen aktiven Lastmodulation kann zwar die Reichweite der Kommunikation zwischen Lesegerät und Transpondereinheit erhöht werden. Dies eröffnet jedoch auch die Möglichkeit von Angriffen, bei denen über ein entsprechend starkes magnetisches Wechselfeld über große Entfernungen Daten an ein Lesegerät übermittelt werden und das Lesegerät unbefugt manipuliert wird.

In US 2004/256460 wird ein Transponder aufgrund der Änderung einer Hüllkurve eines ausgesendeten Signals erkannt. US 2005/0212673 und EP 2105862 zeigen weitere RFID-Lesegeräte. EP 1901202 A2 zeigt den Oberbegriff von Anspruch 1.

Aufgabe der Erfindung ist es deshalb, ein Lesegerät und ein Verfahren zum Betrieb eines Lesegeräts zu schaffen, mit denen die soeben beschriebenen Angriffe erkannt werden können.

Diese Aufgabe wird durch das Lesegerät gemäß Patentanspruch 1 bzw. das Verfahren zum Betrieb eines Lesegeräts gemäß Patentanspruch 16 gelöst. Weiterbildungen der Erfindung sind in den abhängigen Ansprüchen definiert.

Das erfindungsgemäße Lesegerät umfasst eine erste Antenne zur Generierung eines Lesegerätfelds in der Form eines magnetischen Wechselfeldes, über das eine Transpondereinheit mit entsprechenden Verfahren basierend auf aktiver bzw. passiver Lastmodulation kommunizieren kann. Neben dieser ersten Sendeantenne beinhaltet das Lesegerät ferner eine oder mehrere zweite Antennen, welche derart ausgestaltet und in Bezug auf die erste Antenne angeordnet sind, dass während einer kontaktlosen Kommunikation des Lesegeräts mit einer Transpondereinheit, welche mittels (aktiver oder passiver) Lastmodulation Kommunikationssignale generiert, an der oder den zweiten Antennen eine vorbestimmte Veränderung eines Detektionssignals erfasst wird, falls sich die Transpondereinheit in einem vorbestimmten Bereich um das Lesegerät befindet. D.h., das erfindungsgemäße Lesegerät ermöglicht bei einer bereits stattfindenden kontaktlosen Kommunikation mit einer Transpondereinheit eine Bestimmung, ob sich die Transpondereinheit im Nahbereich um das Lesegerät befindet. Der obige Begriff der vorbestimmten Veränderung eines Detektionssignals ist weit zu verstehen und kann insbesondere auch eine Veränderung des Detektionssignals von einem Wert Null auf einen Wert ungleich Null umfassen, was gleichbedeutend mit der Messung eines Detektionssignals ist. Die Ausgestaltung der zweiten Antenne bzw. Antennen betrifft erfindungsgemäß nicht nur deren Formgebung, sondern auch deren Verschaltung untereinander bzw. im Lesegerät, um hierdurch die Erfassung eines Detektionssignals zu ermöglichen.

Die Erfindung macht sich die Erkenntnis zunutze, dass durch eine geeignete Anordnung von einer oder mehreren zweiten Antennen ein Detektionssignal generiert werden kann, aus dem bestimmbar ist, ob sich eine Transpondereinheit in der Nähe des Lesegeräts befindet. Die Veränderung des Detektionssignals kann dabei erfasst werden, wenn bereits eine kontaktlose Kommunikation zwischen Lesegerät und Transpondereinheit erfolgt. Im Falle, dass eine von einer vorbestimmten Veränderung des Detektionssignals abweichende Veränderung auftritt, kann daraus geschlossen werden, dass die Kommunikation von einer entfernt vom Lesegerät angeordneten Transpondereinheit ausgeht, so dass ein Angriff mittels eines Transponders mit hoher Sendeleistung basierend auf aktiver Lastmodulation vorliegt.

Je nach Ausgestaltung des Detektionssignals kann die vorbestimmte Veränderung des Detektionssignals, über welche die Annäherung einer Transpondereinheit innerhalb eines vorbestimmten Bereichs um das Lesegerät festgestellt wird, verschieden ausgestaltet sein. Vorzugsweise wird als Detektionssignal ein entsprechendes Spannungssignal oder Stromsignal erfasst. In einer weiteren Variante ist die vorbestimmte Veränderung des Detektionssignals durch einen Maximalwert der Veränderung des Detektionssignals charakterisiert. Sollte die Veränderung des Detektionssignals über diesen Maximalwert hinausgehen, kann dies als ein Angriff einer entfernt vom Lesegerät angeordneten Transpondereinheit gewertet werden.

Das erfindungsgemäße Lesegerät ist vorzugsweise ein NFC-Lesegerät (NFC = Near Field Communication), wobei das Lesegerät in einer bevorzugten Variante auf dem Standard ISO/IEC 14443 basiert.

In einer besonders bevorzugten Ausgestaltung des erfindungsgemäßen Lesegeräts wird über das Lesegerätfeld die vorbestimmte Veränderung des Detektionssignals erfasst. Diese Variante des Lesegeräts hat den Vorteil, dass neben dem zur Kommunikation verwendeten Lesegerätfeld kein weiteres Feld, welches z. B. mit einer anderen Frequenz oder einer anderen Sendeleistung ausgesendet wird, erforderlich ist, um die Anwesenheit einer Transpondereinheit zu detektieren.

Der vorbestimmte Bereich, in dem die Anwesenheit einer Transpondereinheit über das erfindungsgemäße Lesegerät detektiert wird, kann je nach Anwendungsfall über entsprechende Auslegung des oder der zweiten Antennen angepasst werden. Wie in Fig. 1 die Druckschrift WO 2006/000446 A1 gezeigt ist, sind für ein herkömmliches Lesegerät eine Energiereichweite und eine Kommunikationsreichweite festgelegt. Die Energiereichweite ist dabei die Reichweite zur Kommunikation mit einem passiven Transponder ohne eigene Energieversorgung, wobei in diesem Fall die Energie zum Betrieb des Transponders über das Lesegerätfeld bereitgestellt wird. Demgegenüber ist die Kommunikationsreichweite die Reichweite im Falle der Kommunikation des Lesegeräts mit einem aktiven Transponder mit eigener Energieversorgung, bei der das Lesegerätfeld keine Energie zum Betrieb des Transponders bereitstellen muss. Diese Reichweite ist größer als die Energiereichweite. Bei der Verwendung der aktiven Lastmodulation werden die Energiereichweite bzw. Kommunikationsreichweite entsprechend erweitert. Der vorbestimmte Bereich des erfindungsgemäßen Lesegeräts, in dem die Anwesenheit eines Transponders detektiert wird, kann in geeigneter Weise an die soeben beschriebenen Kommunikationsreichweiten bzw. Energiereichweiten angepasst werden. In einer Ausführungsform wird der vorbestimmte Bereich derart festgelegt, dass er der Reichweite entspricht, welche sich üblicherweise bei der Verwendung der aktiven Lastmodulation ergibt. Insbesondere kann der vorbestimmte Bereich auch so eingestellt werden, dass er der Kommunikationsreichweite bzw. Energiereichweite eines Lesegeräts mit oder ohne Lastmodulation bei normaler Antennengröße einer aktiven oder passiven Transpondereinheit entspricht. Die maximale normale Antennengröße ist dabei insbesondere die Antennengröße für einen Transponder in der Form einer ID1-Karte, welche bei in etwa 4.000 mm$^2$ liegt.

In einer bevorzugten Variante ist der vorbestimmte Bereich, für den das erfindungsgemäße Lesegerät die Anwesenheit eines Transponders detektiert, der Bereich bis zu einem Abstand von 50 cm vom Lesegerät oder ggf. auch der Bereich in einem geringeren Abstand, bspw. der Bereich bis zu einem Abstand von 25 cm vom Lesegerät. Dieser Bereich entspricht einer herkömmlichen Reichweite einer Kommunikation zwischen Lesegerät und Transpondereinheit unter Verwendung von aktiver Lastmodulation. Nichtsdestotrotz besteht auch die Möglichkeit, die Reichweite derart festzulegen, dass sie nicht über die Reichweite einer herkömmlichen Kommunikation rein basierend auf passiver Lastmodulation hinausgeht. Insbesondere kann der vorbestimmte Bereich den Bereich bis zu einem Abstand von 10 cm vom Lesegerät oder bis zu einem kleineren Abstand darstellen, vorzugsweise den Bereich bis zu einem Abstand von 7 cm vom Lesegerät. Der zuletzt genannte Abstand ist dabei die herkömmliche Kommunikationsreichweite zwischen einem Lesegerät und einem passiven Transponder in der Form einer ID1-Karte.

In einer besonders bevorzugten Ausführungsform ist das erfindungsgemäße Lesegerät derart ausgestaltet, dass es eine Kommunikation mit einer Transpondereinheit unterbricht, wenn an der oder den zweiten Antennen die vorbestimmte Veränderung eines Detektionssignals nicht erfasst wird. Auf diese Weise wird ein wirksamer und schneller Schutz gegen einen Angriff mittels eines manipulierten Transponders mit hoher Sendeleistung in großer Entfernung vom Lesegerät erreicht.

In einer weiteren Ausgestaltung des erfindungsgemäßen Lesegeräts ist die erste Antenne als eine erste Leiterschleife ausgebildet, und es sind zwei zweite Antennen in der Form von einem Paar von zweiten Leiterschleifen vorgesehen. Dabei sind die zweiten Leiterschleifen im Wesentlichen koplanar und insbesondere konzentrisch (d.h. mit dem gleichen Mittelpunkt) mit der ersten Leiterschleife angeordnet. Ferner ist eine der zweiten Leiterschleifen um die erste Leiterschleife herum positioniert, wohingegen die andere der zweiten Leiterschleifen innerhalb der ersten Leiterschleife angeordnet ist. Durch die zweiten Leiterschleifen wird aufgrund des Lesegerätfeldes eine Spannung induziert, wobei die Anordnung der Leiterschleifen durch eine im vorbestimmten Bereich positionierte Transpondereinheit verstimmt wird, was wiederum einen Einfluss auf die induzierte Spannung hat und somit die Erfassung einer Transpondereinheit im Nahbereich ermöglicht.

In einer bevorzugten Variante der soeben beschriebenen Ausführungsform sind die jeweiligen Durchmesser der ersten und der zweiten Leiterschleifen derart gewählt, dass der Kopplungsfaktor zwischen der einen zweiten Leiterschleife und der ersten Leiterschleife im Wesentlichen genau so groß ist wie der Kopplungsfaktor zwischen der ersten Leiterschleife und der anderen zweiten Leiterschleife. Hierdurch kann eine Anordnung erreicht werden, bei der das Detektionssignal auf Null gesetzt ist, wenn keine Transpondereinheit im vorbestimmten Bereich um das Lesegerät eingebracht wird. Umgekehrt tritt eine Abweichung von diesem Nullwert auf, wenn eine Transpondereinheit in dem vorbestimmten Bereich vorhanden ist.

In einer weiteren Ausgestaltung sind die beiden zweiten Leiterschleifen des Lesegeräts gegenphasig in Reihe geschaltet, wobei als Detektionssignal ein Spannungssignal erfasst wird, welches im Betrieb des Lesegeräts an dieser Reihenschaltung anliegt. Alternativ oder zusätzlich besteht auch die Möglichkeit, dass die beiden zweiten Leiterschleifen gleichphasig in Reihe geschaltet sind, wobei als Detektionssignal ein Spannungssignal erfasst wird, welches in Betrieb des Lesegeräts an einem Potentiometer zwischen den zwei gleichphasig in Reihe geschalteten zweiten Leiterschleifen anliegt. Bei der zuletzt genannten Variante kann das Potentiometer zur Durchführung eines Nullabgleichs verwendet werden, indem das Potentiometer derart eingestellt wird, dass das Spannungssignal Null ist, wenn sich keine Transpondereinheit im vorbestimmten Bereich um das Lesegerät befindet.

In einer weiteren Ausführungsform des erfindungsgemäßen Lesegeräts sind die jeweiligen Durchmesser der ersten und der zweiten Leiterschleifen derart gewählt, dass der Kopplungsfaktor zwischen der einen zweiten Leiterschleife und der ersten Leiterschleife einen anderen Wert aufweist als der Kopplungsfaktor zwischen der ersten Leiterschleife und der anderen zweiten Leiterschleife. Durch die abweichende Wahl der Durchmesser kann das Lesegerät gegenüber einem externen Feld eines Angreifers empfindlicher gemacht werden und somit einfacher Angriffe mittels aktiver Lastmodulation erfasst werden.

In einer weiteren Ausgestaltung des erfindungsgemäßen Lesegeräts ist die erste Antenne wiederum als eine erste Leiterschleife ausgebildet, wobei nunmehr jedoch eine einzelne zweite Antenne in der Form einer zweiten Leiterschleife vorgesehen ist. Dabei ist die zweite Leiterschleife im Wesentlichen koplanar mit der ersten Leiterschleife derart angeordnet, dass sich der durch die Innenfläche der zweiten Leiterschleife laufenden magnetischen Fluss des Lesegerätfelds für die gesamte Innenfläche aufhebt. In dieser Variante wird über das Lesegerätfeld keine Spannung in der zweiten Leiterschleife induziert, d.h. die zweite Leiterschleife kann kein Signal von der ersten Leiterschleife empfangen. Wird nunmehr ein Transponder in den vorbestimmten Bereich um das Lesegerät eingebracht, erfolgt wiederum eine Verstimmung der Anordnung an Leiterschleifen, was als vorbestimmte Veränderung des Detektionssignals erfasst werden kann. Die soeben beschriebene Anordnung weist den Vorteil auf, dass lediglich eine einzelne zweite Antenne zum Erfassen eines Transponders im Nahbereich benötigt wird.

Die Erfindung umfasst ferner ein Verfahren zum Betrieb eines Lesegeräts, welches ein Lesegerätfeld in der Form eines magnetischen Wechselfeldes generiert, wobei das Lesegerät erfasst, falls sich eine Transpondereinheit in einem vorbestimmten Bereich um das Lesegerät befindet, und wobei eine kontaktlose Kommunikation des Lesegeräts mit der Transpondereinheit stattfindet, welche mittels Lastmodulation Kommunikationssignale generiert. Dabei wird zeitgleich mit der kontaktlosen Kommunikation durch das Lesegerät überprüft, ob sich die Transpondereinheit in einem vorbestimmten Bereich um das Lesegerät befindet. Die kontaktlose Kommunikation wird als nicht zulässig behandelt, wenn die Überprüfung durch das Lesegerät ergibt, dass sich die Transpondereinheit außerhalb des vorbestimmten Bereichs um das Lesegerät befindet.

In einer besonders bevorzugten Ausführungsform wird das Verfahren zum Betrieb des erfindungsgemäßen Lesegeräts verwendet, welches über seine erste Antenne das Lesegerätfeld generiert, wobei an der oder den zweiten Antennen des Lesegeräts während einer Kommunikation des Lesegeräts mit der Transpondereinheit eine vorbestimmte Veränderung eines Detektionssignals erfasst wird, falls sich die Transpondereinheit in dem vorbestimmten Bereich um das Lesegerät befindet.

In einer weiteren bevorzugten Ausgestaltung des erfindungsgemäßen Verfahrens wird im Falle, dass die kontaktlose Kommunikation als nicht zulässig behandelt wird, die Kommunikation mit der Transpondereinheit durch das Lesegerät abgebrochen und/ oder unechte Daten durch das Lesegerät an die Transpondereinheit kommuniziert und/ oder ein Alarm durch das Lesegerät ausgegeben und/ oder eine an die Kommunikation gekoppelte Aktion durch das Lesegerät unterbunden. Beispielsweise wird ein Zugang nicht freigegeben oder eine Ware nicht ausgegeben.

Ausführungsbeispiele der Erfindung werden nachfolgend anhand der beigefügten Figuren detailliert beschrieben.

Es zeigen:

Fig. 1    eine schematische Darstellung, welche einen Angriff auf ein kontaktloses Lesegerät mittels aktiver Lastmodulation wiedergibt;

Fig. 2    eine erste Ausführungsform eines erfindungsgemäßen Lesegeräts zur Detektion eines Angriffs mittels aktiver Lastmodulation;

Fig. 3    ein Diagramm, welches die Veränderung des Kopplungsfaktors zwischen zwei Leiterschleifen in Abhängigkeit von deren Durchmesserverhältnis wiedergibt;

Fig. 4    eine zweite Ausführungsform eines erfindungsgemäßen Lesegeräts zur Detektion eines Angriffs mittels aktiver Lastmodulation; und

Fig. 5  eine dritte Ausführungsform eines erfindungsgemäßen Lesegeräts zur Detektion eines Angriffs mittels aktiver Lastmodulation.

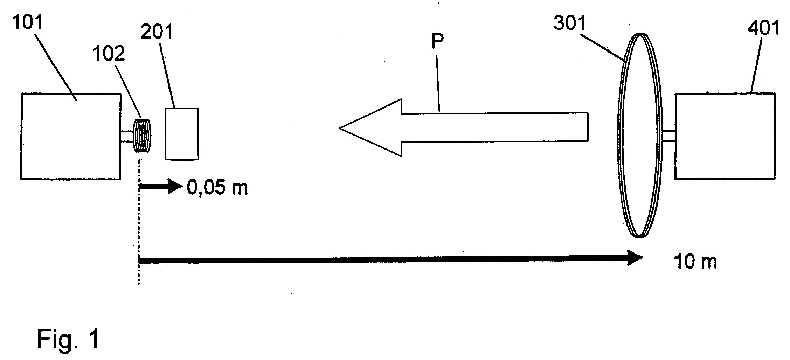

Im Folgenden werden Ausführungsformen der Erfindung basierend auf einem Lesegerät zur NFC-Kommunikation mit einer Transpondereinheit (im Folgenden auch als Transponder bezeichnet) gemäß dem Standard ISO/IEC 14443 beschrieben. Die Erfindung ist jedoch auch auf andere Standards zur NFC- bzw. Nahfeld-Kommunikation anwendbar. Die nachfolgend erläuterten Lesegeräte dienen dazu, einen Angriff mittels aktiver Lastmodulation zu detektieren. Wie weiter oben bereits erläutert, wird bei der aktiven Lastmodulation durch einen Transponder aktiv ein moduliertes Signal ausgesendet, welches von dem Lesegerät wie ein passiv durch den Transponder moduliertes Lesegerätfeld interpretiert wird. Bei der passiven Lastmodulation wird durch Zu- bzw. Abschalten eines Lastwiderstands im Transponder das Lesegerätfeld moduliert, ohne dass der Transponder ein Signal aussendet. Bei der Verwendung der aktiven Lastmodulation besteht das Problem, dass mittels spezieller Transponder mit sehr hoher Sendeleistung über große Entfernungen hinweg ein Signal an das Lesegerät übermittelt werden kann und hierdurch das Lesegerät durch Angreifer manipuliert werden kann. Ein entsprechendes Angriffszenario ist in Fig. 1 wiedergegeben.

Fig. 1 zeigt ein herkömmliches Lesegerät 101 mit einer entsprechenden Antenne 102. Das Lesegerät sendet zur Kommunikation mit einem Transponder ein magnetisches Wechselfeld mit einer Trägerfrequenz von 13,56 MHz über die Antenne 102 aus. Im ordnungsgemäßen Betrieb befindet sich der entsprechende Transponder 201 in einer Reichweite von einigen Zentimetern vom Lesegerät und kommuniziert in diesem Abstand über aktive bzw. passive Lastmodulation mit dem Lesegerät. Bei der passiven Lastmodulation mit Transpondern ohne eigene Energieversorgung ist die Kommunikationsreichweite durch die Energiereichweite des Lesegerätfelds eingeschränkt, da die Energieversorgung des Transponders über das Feld des Lesegeräts erfolgt. Bei Transpondern mit eigener Energieversorgung ist die Kommunikationsreichweite zwischen Lesegerät und Transponder größer als die Energiereichweite. Bei der Verwendung von aktiver Lastmodulation kann die Kommunikationsreichweite erhöht werden. Durch die Verwendung eines Transponders mit hoher Sendeleistung, der in Fig. 1 durch die Verarbeitungseinheit 401 und eine damit gekoppelte Antenne 301 angedeutet ist, kann über eine entsprechende Simulation in der Verarbeitungseinheit 401 eine aktive Lastmodulation über Entfernungen von mehreren Metern hinweg vorgetäuscht werden. Das hierzu von der Antenne 301 ausgesendete Signal ist dabei durch den Pfeil P angedeutet. Mit einer Transponderantenne 301, die einen Durchmesser von etwa einem Meter aufweist, können maximale Sendeleistungen von 300 Watt erzielt werden, mit denen die dargestellte Reichweite von 10 m erreicht werden kann. Gemäß Fig.

1 ist es somit möglich, die nominale Lesereichweite eines ISO 14443 NFC-Systems von 3-10 cm um mehr als den Faktor 100 zu erhöhen, um dadurch aus großer Entfernung einem Lesegerät eine physikalisch vorhandene Transpondereinheit vorzutäuschen.

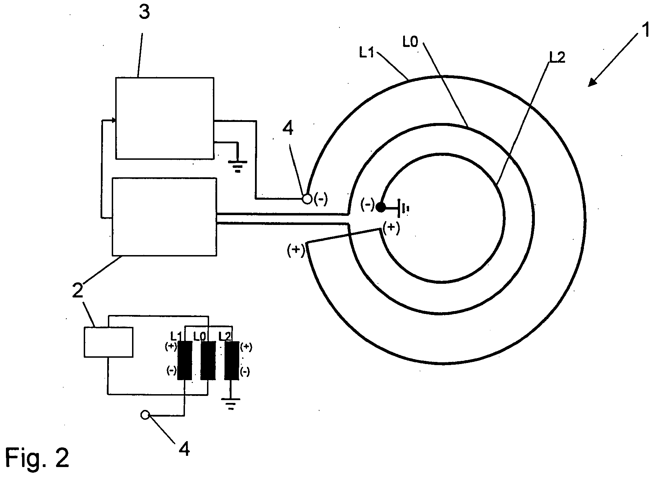

Um den anhand von Fig. 1 beschriebenen Angriff detektieren zu können, werden erfindungsgemäß spezielle Ausbildungen eines Lesegeräts verwendet, welche nachfolgend anhand von Fig. 2 bis Fig. 5 beschrieben werden. Fig. 2 zeigt eine erste Ausführungsform eines erfindungsgemäßen Lesegeräts, welches in seiner Gesamtheit mit dem Bezugszeichen 1 bezeichnet ist. Das Lesegerät umfasst eine Verarbeitungseinheit 2, welche Signale zur Generierung des magnetischen Wechselfelds des Lesegeräts erzeugt und welche Signale des modulierten Lesegerätfelds verarbeitet. Herkömmlicherweise wird diese Verarbeitungseinheit auch als Reader bezeichnet. Mit dem Reader ist eine Sendeantenne in der Form einer Leiterschleife L0 gekoppelt, über welche das Lesegerätfeld ausgesendet wird. Zur Detektion einer Transpondereinheit im Nahbereich des Lesegeräts sind ferner zwei weitere Leiterschleifen L1 und L2 vorgesehen, welche koplanar in der gleichen Ebene wie die Leiterschleife L0 angeordnet sind. Die Leiterschleife L1 erstreckt sich dabei um die Leiterschleife L0 herum, wohingegen die Leiterschleife L2 innerhalb der Leiterschleife L0 angeordnet ist. Die Leiterschleifen L0, L1 und L2 sind ferner konzentrisch zueinander positioniert, d.h. sie weisen alle den gleichen Mittelpunkt auf.

Wie sich aus einem entsprechenden Ersatzschaltbild im unteren Teil der Fig. 2 ergibt, sind die Leiterschleifen L1 und L2 gegenphasig verschaltet und an dem Anschluss 4 mit einer Detektionseinheit 3 verbunden, über welche das Einbringen einer Transpondereinheit in einem vorbestimmten Nahbereich um das Lesegerät detektierbar ist und somit umgekehrt bei Vorhandensein eines aktiv modulierten Feldes, welches von einem Transponder außerhalb des Nahbereichs generiert wird, auf einen in Fig. 1 wiedergegebenen Angriff geschlossen werden kann. Die Leiterschleifen L0, L1 und L2 weisen Durchmesser auf, welche wie folgt gewählt sind:

$$D_{L1} > D_{L0} > D_{L2} \qquad (1)$$

Dabei bezeichnet $D_{L1}$ den Durchmesser der Leiterschleife L1, $D_{L0}$ den Durchmesser der Leiterschleife L0 und $D_{L2}$ den Durchmesser der Leiterschleife L2. Die Durchmesser $D_{L1}$ und $D_{L2}$ der Leiterschleifen L1 bzw. L2 werden außerdem so gewählt, dass das Verhältnis zum Durchmesser der ersten Leiterschleife L0 für beide Leiterschleifen L1 und L2 gleich ist, d.h. wie folgt lautet:

$$\frac{D_{L1}}{D_{L0}} = \frac{D_{L0}}{D_{L2}} \qquad (2)$$

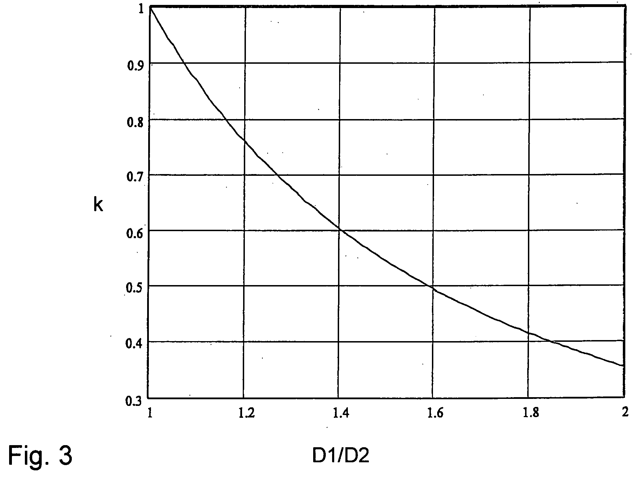

Dies hat zur Folge, dass sich zwischen den Leiterschleifen L1 und L0 sowie zwischen den Leiterschleifen L0 und L2 der gleiche Kopplungsfaktor $k=k_{10}=k_{20}$ einstellt. Der Kopplungsfaktor k ist eine bekannte Größe, welche die Flussverkopplung zweier Leiterschleifen beschreibt. Der Kopplungsfaktor ist dabei umso kleiner, je größer der Unterschied zwischen den Durchmessern der Leiterschleifen ist, deren Kopplung durch den Kopplungsfaktor beschrieben wird. Dies wird anhand des Diagramms gemäß Fig. 3 verdeutlicht. Entlang der Abszisse dieses Diagramms ist das Durchmesserverhältnis D1/D2 von zwei Leiterschleifen aufgetragen, wobei D1 immer den größeren Durchmesser der beiden Leiterschleife bezeichnet. Demgegenüber ist entlang der Ordinate der Kopplungsfaktor k wiedergegeben. Der Kopplungsfaktor liegt dabei zwischen 0 und 1, wobei die größtmögliche Kopplung k=1 bei gleichen Durchmessern D1 und D2 auftritt. Je größer der Unterschied zwischen den Durchmessern ist, desto kleiner wird der Kopplungsfaktor, wobei Fig. 3 beispielhaft Werte des Kopplungsfaktors k für Durchmesserverhältnisse zwischen 1 und 2 wiedergegeben sind.

Im Lesegerät der Fig. 2 wird am Anschluss 4 die an der Reihenschaltung der Leiterschleifen L1 und L2 anliegende Spannung detektiert, welche aufgrund von Induktion über das Lesegerätfeld der Leiterschleife L0 erzeugt wird. Aufgrund der oben beschriebenen Wahl der Durchmesser sowie der gegenphasigen Verschaltung der Leiterschleifen ist die induzierte Wechselspannung in den Leiterschleifen L1 und L2 gleich groß, so dass über die Detektionseinheit 3 ein Spannungssignal von Null gemessen wird, sofern sich keine Transpondereinheit in Reichweite des Lesegeräts 1 befindet. Dabei ist zu berücksichtigen, dass ferner auch noch eine nicht zu verhindernde zusätzliche magnetische Kopplung $k_{21}$ zwischen den Leiterschleifen L1 und L2 auftritt, welche dazu führt, dass die oben beschriebenen Durchmesserverhältnisse nicht exakt zu einer Spannung von Null führen, sondern nur in sehr guter Näherung. Durch entsprechende geringfügige Anpassung der Durchmesser $D_{L1}$ und $D_{L2}$ kann das Lesegerät gemäß Fig. 2 jedoch trotzdem derart eingestellt werden, dass die Leiterschleifen L1 und L2 Spannungen vom gleichen Betrag induzieren, so dass exakt eine Spannung von Null über die Detektionseinheit 3 gemessen wird, sofern sich keine Transpondereinheit in Reichweite des Lesegeräts befindet.

Mit dem in Fig. 2 gezeigten Lesegerät kann nunmehr das Vorhandensein einer Transpondereinheit bzw. ein Angriff mittels aktiver Lastmodulation detektiert werden. Wie oben erwähnt, tritt im Normalbetrieb des Lesegeräts, in dem die Antenne L0 ein magnetisches Wechselfeld aussendet, am Anschluss 4 eine Ausgangsspannung von näherungsweise Null auf. Wird nunmehr in das Lesegerätfeld ein Transponder eingebracht, so führt dies dazu, dass die Anordnung der Leiterschleifen des Lesegeräts durch eine zusätzliche magnetische Kopplung mit dem Transponder verstimmt wird. Hierdurch wird eine (konstante) Ausgangsspannung am Anschluss 4 erzeugt, welche deutlich messbar ist und über welche auf die Anwesenheit eines Transponders in unmittelbarer Nähe des Lesegeräts geschlossen werden kann. Das Lesegerät ist dabei derart ausgestaltet, dass dann, wenn der Empfang von Kommunikationssignalen vom Transponder festgestellt wird, eine Überprüfung der Ausgangsspannung am Anschluss erfolgt. D.h., während einer laufenden kontaktlosen Kommunikation wird durch das Lesegerät bestimmt, ob der Transponder sich im Nahbereich des Lesegeräts befindet, wodurch auf Angriffe mittels aktiver Lastmodulation geschlossen werden kann, sofern kein Transponder im Nahbereich detektiert werden kann.

Je nach Anwendungsfall kann durch geeignete Wahl der Durchmesser bzw. der Durchmesserverhältnisse der einzelnen Leiterschleifen festgelegt werden, bis zu welchem Abstand von dem Lesegerät die Anwesenheit eines Transponders im Nahbereich detektierbar ist. Der Abstand wird vorzugsweise derart gewählt, dass er innerhalb einer herkömmlichen Kommunikationsreichweite bzw. Energiereichweite eines Lesegeräts liegt, welches mit einem herkömmlichen Transponder, bspw. in der Form einer ID1-Chipkarte, Daten austauscht. Insbesondere kann der Abstand derjenigen Kommunikationsreichweite entsprechen, welche sich für aktive Transponder mit Energieversorgung, bzw. mit der Funktionalität einer aktiven Lastmodulation ergibt. Der Abstand kann für bestimmte Anwendungen auch derart festgelegt werden, dass er nicht über eine herkömmliche Kommunikationsreichweite zwischen einem Lesegerät und einem passiven Transponder hinausgeht.

Mit Hilfe der Detektionseinheit 3 wird somit festgestellt, dass sich ein mit dem Lesegerät kommunizierender Transponder in einem vorbestimmten Nahbereich zum Lesegerät befindet, wenn ein vorbestimmter Spannungspegel detektiert wird. Erfolgt nunmehr ein Angriff mittels aktiver Lastmodulation, bei dem ein Angreifer von außen ein starkes Magnetfeld generiert, führt dies in den Leiterschleifen L1 und L2 zu deutlich unterschiedlichen Spannungen, die sich von der Ausgangsspannung unterscheiden, welche sich beim Einbringen eines Transponders in den vorbestimmten Nahbereich um das Lesegerätfeld ergibt. Die Spannungen werden dabei dadurch hervorgerufen, dass die weit entfernte Sendeantenne eines Angreifers mit den Leiterschleifen L1 und L2 unterschiedliche Kopplungsfaktoren ausbildet. Demzufolge induziert ein außerhalb des Lesegeräts erzeugtes magnetisches Wechselfeld in den Leiterschleifen L1 und L2 ein deutlich detektierbares Feld. Über die Detektionseinheit 3 kann somit festgestellt werden, ob ein Transponder in einem vorbestimmten Bereich um das Lesegerät eingebracht wird oder ob außerhalb des vorbestimmten Bereichs ein magnetisches Wechselfeld generiert wird. Im letzteren Fall wird darauf geschlossen, dass ein Angriff durch einen unbefugten Dritten vorliegt, da in großer Entfernung vom Lesegerät versucht wird, mit diesem eine Kommunikation aufzunehmen. Als Folge kann dann das Lesegerät die Kommunikation mit dem Angreifer unterbinden.

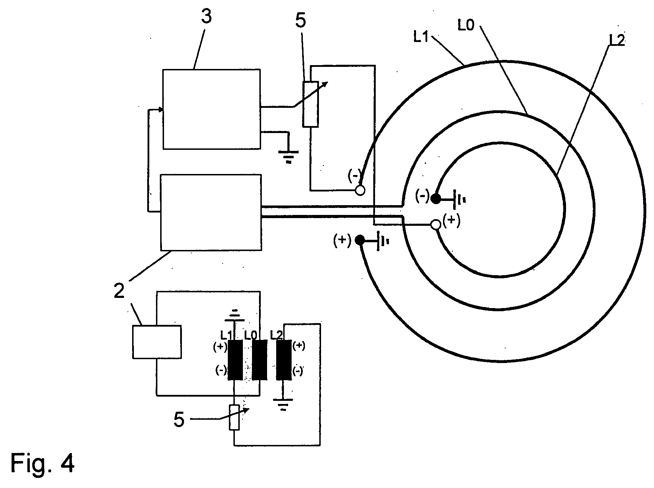

Fig. 4 zeigt eine Abwandlung des Lesegeräts der Fig. 2. Dabei werden gleiche bzw. entsprechende Bauteile mit dem gleichen Bezugszeichen bezeichnet. In Analogie zu Fig. 2 umfasst das Lesegerät 1 der Fig. 4 wiederum die Leiterschleife L0 zum Aussenden des Lesegerätfelds sowie die dazu konzentrisch und koplanar angeordneten Leiterschleifen L1 und L2. In einer erfindungsgemäßen Variante werden die Durchmesser dabei analog zu Fig. 2 derart gewählt, dass der Kopplungsfaktor zwischen der Leiterschleife L1 und der Leiterschleife L0 genauso groß ist wie der Kopplungsfaktor zwischen der Leiterschleife L0 und der Leiterschleife L2. Im Unterschied zur Ausführungsform der Fig. 2 sind die Leiterschleifen L1 und L2 nunmehr jedoch gleichphasig in Reihe geschaltet, wie auch durch das Ersatzschaltbild im unteren Teil der Fig. 4 angedeutet ist. Neben dem Reader 2 und der Detektionseinheit 3 ist ferner ein Potentiometer 5 vorgesehen, welches zwischen den beiden Leiterschleifen L1 und L2 angeordnet ist. Durch die Verschaltung der Leiterschleifen L1 und L2 kann eine negative und eine positive Spannung abgegriffen werden, welche im Betrag annähernd gleich groß sind, sofern die Spannungen durch das über die Leiterschleife L0 erzeugte Lesegerätfeld induziert werden. Mittels des Potentiometers 5 wird nunmehr ein Nullabgleich durchgeführt, d.h. der Spannungsabgriff wird derart eingestellt, dass eine Spannung von Null detektiert wird, sofern sich kein Transponder in dem entsprechend definierten vorbestimmten Bereich um das Lesegerät befindet.

In Analogie zur Ausführungsform der Fig. 2 führt das Einbringen eines Transponders im vorbestimmten Nahbereich um das Lesegerät der Fig. 4 zu einer Verstimmung der Anordnung aller Leiterschleifen, so dass eine konstante Ausgangsspannung über die Detektionseinheit 3 erfasst wird. Im Unterschied hierzu induziert ein von außen, durch einen entfernten Angreifer mittels aktiver Lastmodulation eingekoppeltes Magnetfeld in den Leiterschleifen L1 und L2 deutlich unterschiedliche Spannungen, welche sich von der konstanten Ausgangsspannung unterscheiden, die sich beim Einbringen eines Transponders im Nahbereich des Lesegeräts ergibt. Somit kann analog zu Fig. 2 ermittelt werden, ob sich ein Transponder im Nahbereich befindet oder ob ein Angriff durch ein entferntes magnetisches Wechselfeld vorliegt.

Der Vorteil des Lesegeräts gemäß Fig. 4 besteht darin, dass die induzierten Spannungen der Leiterschleifen L1 und L2 im Betrag nicht gleich groß sein müssen, da Abweichungen über den oben beschriebenen Nullabgleich mittels des Potentiometers 5 kompensiert werden können. Somit können die Durchmesserverhältnisse ggf. auch abweichend zu der oben eingeführten Bedingung gewählt werden, wonach die Kopplungsfaktoren gleich groß sind. Insbesondere können die Durchmesser der Leiterschleifen L1 und L2 sogar absichtlich abweichend von der Bedingung gleicher Kopplungsfaktoren gewählt werden, um die Anordnung gegenüber einem von außen empfangenen magnetischen Wechselfeld empfindlicher zu machen. Beispielsweise kann der Durchmesser der Leiterschleife L1 größer bzw. der Durchmesser der Leiterschleife L2 kleiner ausgelegt werden, als es nach der obigen Gleichung (2) vorgegeben wäre.

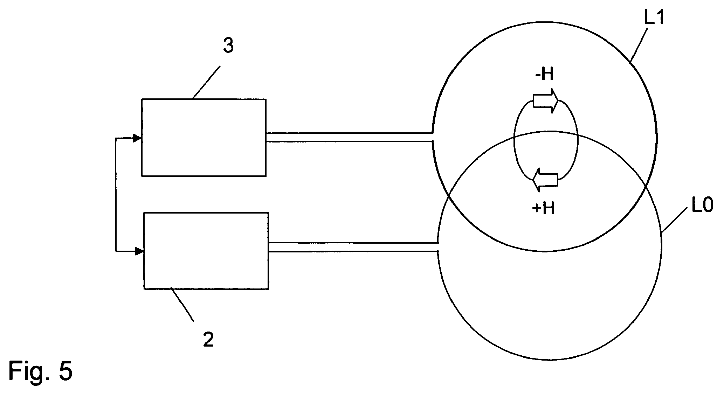

Fig. 5 zeigt eine dritte Ausführungsform eines erfindungsgemäßen Lesegeräts. In Analogie zu dem Lesergeräts gemäß Fig. 2 und Fig. 4 umfasst das Lesegerät wiederum den Reader 2 mit einer Antenne in der Form einer Leiterschleife L0. Im Unterschied zu den obigen Ausführungsformen ist nunmehr jedoch eine einzelne zusätzliche Leiterschleife L1 vorgesehen, welche in der Ausführungsform der Fig. 5 im Wesentlichen den gleichen Durchmesser wie die Leiterschleife L0 aufweist.

In Fig. 5 sind ferner durch +H und -H sowie entsprechende Pfeile die magnetischen Feldlinien des Lesegerätfeldes innerhalb bzw. außerhalb der Leiterschleife L0 angedeutet. Die Feldlinien verlaufen innerhalb und außerhalb der Leiterschleife L0 in unterschiedlichen Richtungen. In dem Lesegerät der Fig. 5 macht man sich diese Erkenntnis derart zunutze, dass die Leiterschleife L1 koplanar so auf der Leiterschleife L0 platziert wird, dass sich der durch die Innenfläche der Leiterschleife L1 laufende magnetische Fluss $\Phi$ über die gesamte Innenfläche aufhebt. Dies hat zur Folge, dass eine Detektionseinheit 3, welche mit der Leiterschleife L1 verbunden und an den Reader 2 gekoppelt ist, kein Signal empfängt, sofern ein herkömmliches Lesegerätfeld generiert wird und sich kein Transponder in der Nähe des Lesegeräts befindet.

Demgegenüber wird die Anordnung der Fig. 5 beim Einbringen eines Transponders in einen entsprechend definierten vorbestimmten Bereich um das Lesegerät verstimmt und ein Ausgangssignal an der Detektionseinheit 3 detektiert. Ein davon unterschiedliches Signal wird ferner dann erzeugt, wenn von außen, durch einen entfernten Angreifer mittels aktiver Lastmodulation ein Magnetfeld eingekoppelt wird, denn dieses Magnetfeld ist über die Innenfläche der Leiterschleife L1 weitgehend homogen ausgebildet und induziert damit in der Leiterschleife L1 eine deutlich messbare Spannung, so dass ein Angriff mittels aktiver Lastmodulation problemlos detektiert werden kann.

Wie sich aus den obigen Ausführungen ergibt, kann mit dem erfindungsgemäßen Lesegerät erfasst werden, dass sich ein Transponder bei einer Kommunikation mit dem Lesegerät im Nahbereich des Lesegeräts befindet. Dies liegt daran, dass ein physikalisch in das Lesegerätfeld eingebrachter Transponder zu einer Verstimmung der Antennen-Anordnung des Lesergeräts und damit zu einer langsam ansteigenden, geringen Ausgangspannung führt, welche leicht beobachtet werden kann. Im Unterschied dazu führt eine aktive Lastmodulation aus großer Entfernung zu einem deutlich messbaren Signal an den Leiterschleifen L1 bzw. L1 und L2, welches sich von einem klassischen Lastmodulationssignal unterscheidet. Insbesondere ist die an den Leiterschleifen L1 bzw. L1 und L2 erfasste Amplitude eines externen Lastmodulationssignals, welches entfernt von dem Lesegerät erzeugt wird, genauso groß wie die Amplitude des über die Leiterschleife L0 detektierten Signals. Im Unterschied hierzu führt ein passives Lastmodulationssignal eines passiven Transponders in unmittelbarer Nähe der Leiterschleife L0 zu einem deutlichen Unterschied in den Amplituden.

**Patentansprüche**

1. Lesegerät zur kontaktlosen Kommunikation mit einer Transpondereinheit, wobei das Lesegerät (1) eine erste Antenne (L0) zur Generierung eines Lesegerätfeldes in der Form eines magnetischen Wechselfeldes umfasst, wobei das Lesegerät (1) eine oder mehrere zweite Antennen (L1, L2) umfasst, **dadurch gekennzeichnet, dass** die eine oder mehreren zweiten Antennen (L1, L2) derart ausgestaltet und in Bezug auf die erste Antenne (L0) angeordnet sind, dass während einer kontaktlosen Kommunikation des Lesegeräts (1) über die erste Antenne (L0) mit einer Transpondereinheit, welche mittels Lastmodulation Kommunikationssignale generiert, durch die eine oder mehrere zweiten Antennen (L1, L2) ein Detektionssignal generiert wird und eine vorbestimmte Veränderung des Detektionssignals erfasst wird, falls sich die Transpondereinheit in einem vorbestimmten Bereich um das Lesegerät (1) befindet.

2. Lesegerät nach Anspruch 1, **dadurch gekennzeichnet, dass** als Detektionssignal ein Spannungssignal oder Stromsignal erfasst wird.

3. Lesegerät nach Anspruch 1 oder 2, **dadurch gekennzeichnet, dass** die vorbestimmte Veränderung des Detektionssignals durch einen Maximalwert der Veränderung des Detektionssignals charakterisiert ist.

4. Lesegerät nach einem der vorhergehenden Ansprüche, **dadurch gekennzeichnet, dass** das Lesegerät (1) ein NFC-Lesegerät ist, insbesondere basierend auf dem Standard ISO/ IEC 14443.

5. Lesegerät nach einem der vorhergehenden Ansprüche, **dadurch gekennzeichnet, dass** über das Lesegerätfeld die vorbestimmte Veränderung des Detektionssignals erfasst wird.

6. Lesegerät nach einem der vorhergehenden Ansprüche, **dadurch gekennzeichnet, dass** der vorbestimmte Bereich den Bereich bis zu einem Abstand von 50 cm vom Lesegerät (1) oder bis zu einem kleineren Abstand darstellt, insbesondere den Bereich bis zu einem Abstand von 25 cm vom Lesegerät (1) oder bis zu einem kleineren Abstand.

7. Lesegerät nach einem der vorhergehenden Ansprüche, **dadurch gekennzeichnet, dass** der vorbestimmte Bereich den Bereich bis zu einem Abstand von 10 cm vom Lesegerät (1) oder bis zu einem kleineren Abstand darstellt, insbesondere den Bereich bis zu einem Abstand von 7 cm vom Lesegerät (1) oder bis zu einem kleineren Abstand.

8. Lesegerät nach einem der vorhergehenden Ansprüche, **dadurch gekennzeichnet, dass** das Lesegerät (1) derart ausgestaltet ist, dass es eine Kommunikation mit einer Transpondereinheit unterbricht, wenn an der oder den zweiten Antennen (L1, L2) die vorbestimmte Veränderung des Detektionssignals nicht erfasst wird.

9. Lesegerät nach einem der vorhergehenden Ansprüche, **dadurch gekennzeichnet, dass** die erste Antenne (L0) als eine erste Leiterschleife ausgebildet ist und zwei zweite Antennen (L1, L2) in der Form von einem Paar von zweiten Leiterschleifen vorgesehen sind, wobei die zweiten Leiterschleifen (L1, L2) im Wesentlichen koplanar mit der ersten Leiterschleife (L0) angeordnet sind und eine der zweiten Leiterschleifen (L1) um die erste Leiterschleife (L0) herum und die andere der zweiten Leiterschleifen (L2) innerhalb der ersten Leiterschleife (L0) positioniert ist.

10. Lesegerät nach Anspruch 9, **dadurch gekennzeichnet, dass** die jeweiligen Durchmesser der ersten und der zweiten Leiterschleifen (L0, L1, L2) derart gewählt sind, dass der Kopplungsfaktor zwischen der einen zweiten Leiterschleife (L1) und der ersten Leiterschleife (L0) im Wesentlichen genauso groß ist wie der Kopplungsfaktor zwischen der ersten Leiterschleife (L0) und der anderen zweiten Leiterschleife (L2).

11. Lesegerät nach Anspruch 9 oder 10, **dadurch gekennzeichnet, dass** die beiden zweiten Leiterschleifen (L1, L2) gegenphasig in Reihe geschaltet sind, wobei als Detektionssignal ein Spannungssignal erfasst wird, welches im Betrieb des Lesegeräts (1) an dieser Reihenschaltung anliegt.

12. Lesegerät nach einem der Ansprüche 9 bis 11, **dadurch gekennzeichnet, dass** die beiden zweiten Leiterschleifen (L1, L2) gleichphasig in Reihe geschaltet sind, wobei als Detektionssignal ein Spannungssignal erfasst wird, welches im Betrieb des Lesegeräts (1) an einem Potentiometer (4) zwischen den zwei gleichphasig in Reihe geschalteten zweiten Leiterschleifen (L1, L2) anliegt.

13. Lesegerät nach Anspruch 12, **dadurch gekennzeichnet, dass** das Potentiometer derart eingestellt ist, dass das Spannungssignal Null ist, wenn sich keine Transpondereinheit im vorbestimmten Bereich befindet.

14. Lesegerät nach einem der Ansprüche 9 bis 13, **dadurch gekennzeichnet, dass** die jeweiligen Durchmesser der ersten und der zweiten Leiterschleifen (L0, L1, L2) derart gewählt sind, dass der Kopplungsfaktor zwischen der einen zweiten Leiterschleife (L0) und der ersten Leiterschleife (L0) einen anderen Wert aufweist als der Kopplungsfaktor zwischen der ersten Leiterschleife (L0) und der anderen zweiten Leiterschleife (L2).

15. Lesegerät nach einem der Ansprüche 1 bis 8, **dadurch gekennzeichnet, dass** die erste Antenne als eine erste Leiterschleife (L0) ausgebildet ist und eine zweite Antenne in der Form einer zweiten Leiterschleife (L1) vorgesehen ist, wobei die zweite Leiterschleife (L1) im Wesentlichen koplanar mit der ersten Leiterschleife (L0) derart angeordnet ist, dass sich der durch die Innenfläche der zweiten Leiterschleife (L1) laufende magnetische Fluss des Lesegerätfelds über die gesamte Innenfläche aufhebt.

16. Verfahren zum Betrieb eines Lesegeräts (1), welches ein Lesegerätfeld in der Form eines magnetischen Wechselfeldes generiert, wobei das Lesegerät (1) erfasst, falls sich eine Transpondereinheit in einem vorbestimmten Bereich um das Lesegerät (1) befindet, und wobei eine kontaktlose Kommunikation des Lesegeräts (1) mit der Transpondereinheit stattfindet, welche mittels Lastmodulation Kommunikationssignale generiert,
**dadurch gekennzeichnet, dass**
zeitgleich mit der kontaktlosen Kommunikation durch das Lesegerät (1) überprüft wird, ob sich die Transpondereinheit in dem vorbestimmten Bereich um das Lesegerät (1) befindet, wobei die kontaktlose Kommunikation als nicht zulässig behandelt wird, wenn die Überprüfung durch das Lesegerät (1) ergibt, dass sich die Transpondereinheit außerhalb des vorbestimmten Bereichs um das Lesegerät (1) befindet.

17. Verfahren nach Anspruch 16, **dadurch gekennzeichnet, dass** mit dem Verfahren ein Lesegerät (1) nach einem der Ansprüche 1 bis 15 betrieben wird, wobei in dem Schritt des Überprüfens anhand der vorbestimmten Veränderung des Detektionssignales der zweiten Antenne(n) (L1,L2) festgestellt wird, dass sich die Transpondereinheit in dem vorbestimmten Bereich um das Lesegerät (1) befindet.

18. Verfahren nach Anspruch 16 oder 17, **dadurch gekennzeichnet, dass** im Falle, dass die kontaktlose Kommunikation als nicht zulässig behandelt wird, das Lesegerät (1) die Kommunikation mit der Transpondereinheit abbricht und/ oder unechte Daten an die Transpondereinheit kommuniziert und/ oder einen Alarm ausgibt und/ oder eine an die Kommunikation mit der Transpondereinheit gekoppelte Aktion unterbindet.

**Claims**

1. A reading device for contactless communication with a transponder unit, wherein the reading device (1) has a first antenna (L0) for generating a reading device field in the form of an alternating magnetic field, wherein the reading device (1) comprises one or several second antennas (L1, L2), **characterized in that**
the one or several second antennas (L1, L2) are configured and arranged with reference to the first antenna (L0) such that, during a contactless communication of the reading device (1) via the first antenna (L0) with a transponder unit generating communication signals by means of load modulation, a detection signal is generated by the one or several second antennas (L1, L2) and a predetermined change of the detection signal is captured if the transponder unit is disposed in a predetermined range around the reading device (1).

2. The reading device according to claim 1, **characterized in that** as the detection signal a voltage signal or current signal is captured.

3. The reading device according to claim 1 or 2, **characterized in that** the predetermined change of the detection signal is **characterized by** a maximum value of the change of the detection signal.

4. The reading device according to any of the preceding claims, **characterized in that** the reading device (1) is an NFC reading device, in particular on the basis of the standard ISO/IEC 14443.

5. The reading device according to any of the preceding claims, **characterized in that** the predetermined change of the detection signal is captured via the reading device field.

6. The reading device according to any of the preceding claims, **characterized in that** the predetermined range represents the range up to a distance of 50 cm from the reading device (1) or up to a smaller distance, in particular the range up to a distance of 25 cm from the reading device (1) or up to a smaller distance.

7. The reading device according to any of the preceding claims, **characterized in that** the predetermined range represents the range up to a distance of 10 cm from the reading device (1) or up to a smaller distance, in particular the range up to a distance of 7 cm from the reading device (1) or up to a smaller distance.

8. The reading device according to any of the preceding claims, **characterized in that** the reading device (1) is equipped such that it interrupts a communication with a transponder unit when the predetermined change of the detection signal is not captured at the second antenna or antennas (L1, L2).

9. The reading device according to any of the preceding claims, **characterized in that** the first antenna (L0) is configured as a first conductor loop and two second antennas (L1, L2) are provided in the form of a pair of second conductor loops, wherein the second conductor loops (L1, L2) are arranged substantially coplanarly with the first conductor loop (L0), and one of the second conductor loops (L1) is positioned around the first conductor loop (L0) and the other of the second conductor loops (L2) is positioned inside the first conductor loop (L0).

10. The reading device according to claim 9, **characterized in that** the respective diameters of the first and the second conductor loops (L0, L1, L2) are chosen such that the coupling factor between the one second conductor loop (L1) and the first conductor loop (L0) is substantially as great as the coupling factor between the first conductor loop (L0) and the other second conductor loop (L2).

11. The reading device according to claim 9 or 10, **characterized in that** the two second conductor loops (L1, L2) are connected in series out of phase, wherein there is captured as the detection signal a voltage signal which is present on this series connection during operation of the reading device (1).

12. The reading device according to any of the claims 9 to 11, **characterized in that** the two second conductor loops (L1, L2) are connected in series in phase, wherein there is captured as the detection signal a voltage signal which, during operation of the reading device (1), is present on a potentiometer (4) between the two second conductor loops (L1, L2) connected in series in phase.

13. The reading device according to claim 12, **characterized in that** the potentiometer is set such that the voltage signal is zero when no transponder unit is disposed in the predetermined range.

14. The reading device according to any of the claims 9 to 13, **characterized in that** the respective diameters of the first and the second conductor loops (L0, L1, L2) are chosen such that the coupling factor between the one second conductor loop (L0) and the first conductor loop (L0) has a value that differs from that of the coupling factor between the first conductor loop (L0) and the other second conductor loop (L2).

15. The reading device according to any of the claims 1 to 8, **characterized in that** the first antenna is configured as a first conductor loop (L0), and a second antenna is provided in the form of a second conductor loop (L1), wherein the second conductor loop (L1) is arranged substantially coplanarly with the first conductor loop (L0), such that the magnetic flux of the reading device field running through the inner surface of the second conductor loop (L1) is eliminated over the total inner surface.

16. A method for operating a reading device (1) that generates a reading device field in the form of an alternating magnetic field, wherein the reading device (1) captures, if a transponder unit is disposed in a predetermined range around the reading device (1), and wherein a contactless communication of the reading device (1) takes place with the transponder unit generating communication signals by means of load modulation, **characterized in that** simultaneously to the contactless communication it is checked by the reading device (1) whether the transponder unit is disposed in the predetermined range around the reading device (1), wherein the contactless communication is treated as inadmissible when the check by the reading device (1) yields that the transponder unit is disposed outside of the predetermined range around the reading device (1).

17. The method according to claim 16, **characterized in that** by the method a reading device (1) according to any of the claims 1 to 15 is operated, wherein in the step of checking it is ascertained on the basis of the predetermined change of the detection signal of the second antenna(s) (L1, L2) that the transponder unit is disposed in the predetermined range around the reading device (1).

18. The method according to claim 16 or 17, **characterized in that** in the case that the contactless communication is treated as inadmissible, the reading device (1) aborts the communication with the transponder unit and/or communicates false data to the transponder unit and/or outputs an alarm and/or prevents an action coupled to the communication with the transponder unit.

## Revendications

1. Appareil de lecture destiné à la communication sans contact avec une unité transpondeur, l'appareil de lecture (1) comprenant une première antenne (L0) destinée à la génération d'un champ d'appareil de lecture (1) sous forme d'un champ magnétique alternatif, l'appareil de lecture (1) comprenant une ou plusieurs deuxièmes antennes (L1, L2), **caractérisé en ce que** la une ou les plusieurs deuxièmes antennes (L1, L2) sont conçues et agencées par rapport à la première antenne (L0) de telle façon que, pendant une communication sans contact de l'appareil de lecture (1), par l'intermédiaire de la première antenne (L0), avec une unité transpondeur générant par modulation de charge des signaux de communication, par les une ou plusieurs deuxièmes antennes (L1, L2), un signal de détection est généré et une modification prédéterminée du signal de détection est saisie si l'unité transpondeur se trouve dans une zone prédéterminée autour de l'appareil de lecture (1).

2. Appareil de lecture selon la revendication 1, **caractérisé en ce que**, en tant que signal de détection, c'est un signal de tension ou un signal de courant qui est saisi.

3. Appareil de lecture selon la revendication 1 ou 2, **caractérisé en ce que** la modification prédéterminée du signal de détection est **caractérisée par** une valeur maximale de la modification du signal de détection.

4. Appareil de lecture selon une des revendications précédentes, **caractérisé en ce que** l'appareil de lecture (1) est un appareil de lecture NFC, en particulier basé sur le standard ISO/IEC 14443.

5. Appareil de lecture selon une des revendications précédentes, **caractérisé en ce que**, par l'intermédiaire du champ d'appareil de lecture, la modification prédéterminée du signal de détection est saisie.

6. Appareil de lecture selon une des revendications précédentes, **caractérisé en ce que** la zone prédéterminée représente la zone allant jusqu'à une distance de 50 cm de l'appareil de lecture (1) ou jusqu'à une distance plus faible, en particulier la zone allant jusqu'à une distance de 25 cm de l'appareil de lecture (1) ou jusqu'à une distance plus faible.

7. Appareil de lecture selon une des revendications précédentes, **caractérisé en ce que** la zone prédéterminée représente la zone allant jusqu'à une distance de 10 cm de l'appareil de lecture (1) ou jusqu'à une distance plus faible, en particulier la zone allant jusqu'à une distance de 7 cm de l'appareil de lecture (1) ou jusqu'à une distance plus faible.

8. Appareil de lecture selon une des revendications précédentes, **caractérisé en ce que** l'appareil de lecture (1) est réalisé de telle façon qu'il interrompt une communication avec une unité transpondeur quand, à la ou les deuxièmes antennes (L1, L2), la modification prédéterminée du signal de détection n'est pas saisie.

9. Appareil de lecture selon une des revendications précédentes, **caractérisé en ce que** la première antenne (L0) est conçue en tant qu'une première boucle conductrice et que deux deuxièmes antennes (L1, L2) sont prévues sous forme d'une paire de deuxièmes boucles conductrices, les deuxièmes boucles conductrices (L1, L2) étant essentiellement agencées coplanairement à la première boucle conductrice (L0) et une des deuxièmes boucles conductrices (L1) étant positionnée autour de la première boucle conductrice (L0) et l'autre des deuxièmes boucles conductrices (L2) étant positionnée à l'intérieur de la première boucle conductrice (L0).

10. Appareil de lecture selon la revendication 9, **caractérisé en ce que** les diamètres respectifs de la première et de la deuxième boucles conductrices (L0, L1, L2) sont sélectionnés de telle façon que le facteur de couplage entre la une deuxième boucle conductrice (L1) et la première boucle conductrice (L0) essentiellement égal au facteur de couplage entre la première boucle conductrice (L0) et l'autre deuxième boucle conductrice (L2).

11. Appareil de lecture selon la revendication 9 ou 10, **caractérisé en ce que** les deux deuxièmes boucles conductrices (L1, L2) sont couplées en série en opposition de phase, cependant que, comme signal de détection, c'est un signal de tension qui est saisi, lequel, lors du fonctionnement de l'appareil de lecture (1), est en contact avec ce couplage en série.

12. Appareil de lecture selon une des revendications de 9 à 11, **caractérisé en ce que** les deux deuxièmes boucles conductrices (L1, L2) sont couplées en série en phase, cependant que, comme signal de détection, c'est un signal de tension qui est saisi, lequel, lors du fonctionnement de l'appareil de lecture (1), est en contact avec un potentiomètre (4) entre les deux boucles conductrices (L1, L2) couplées en série en phase.

13. Appareil de lecture selon la revendication 12, **caractérisé en ce que** le potentiomètre est réglé de telle façon que le signal de tension est zéro quand aucune unité transpondeur ne se trouve dans la zone prédéterminée.

**14.** Appareil de lecture selon une des revendications de 9 à 13, **caractérisé en ce que** les diamètres respectifs de la première et de la deuxième boucles conductrices (L0, L1, L2) sont sélectionnés de telle façon que le facteur de couplage entre la une deuxième boucle conductrice (L0) et la première boucle conductrice (L0) présente une autre valeur que le facteur de couplage entre la première boucle conductrice (L0) et l'autre deuxième boucle conductrice (L2).

**15.** Appareil de lecture selon une des revendications de 1 à 8, **caractérisé en ce que** la première antenne est conçue en tant qu'une première boucle conductrice (L0) et qu'une deuxième antenne est prévue sous forme d'une deuxième boucle conductrice (L1), la deuxième boucle conductrice (L1) étant essentiellement agencée coplanairement à la première boucle conductrice (L0) de telle façon que le flux magnétique du champ d'appareil de lecture passant par la surface intérieure de la deuxième boucle conductrice (L1) se compense sur l'ensemble de la surface intérieure.

**16.** Procédé d'exploitation d'un appareil de lecture (1), lequel génère un champ d'appareil de lecture sous forme d'un champ magnétique alternatif, cependant que l'appareil de lecture (1) saisit, si une unité transpondeur se trouve dans une zone prédéterminée autour de l'appareil de lecture (1), et cependant qu'une communication sans contact de l'appareil de lecture (1) avec l'unité transpondeur a lieu, laquelle génère par modulation de charge des signaux de communication,
**caractérisé en ce que**
simultanément à la communication sans contact, il est vérifié par l'appareil de lecture (1) si l'unité transpondeur se trouve dans la zone prédéterminée autour de l'appareil de lecture (1), la communication sans contact étant traitée comme non admissible dans le cas où la vérification par l'appareil de lecture (1) révèle que l'unité transpondeur se trouve à l'extérieur de la zone prédéterminée autour de l'appareil de lecture (1).

**17.** Procédé selon la revendication 16, **caractérisé en ce que**, avec le procédé, un appareil de lecture (1) est exploité selon une des revendications de 1 à 15, cependant que, à l'étape de la vérification au moyen de la modification prédéterminée du signal de détection de la/les deuxième(s) antenne(s) (L1, L2), il est constaté que l'unité transpondeur se trouve dans la zone prédéterminée autour de l'appareil de lecture (1).

**18.** Procédé selon la revendication 16 ou 17, **caractérisé en ce que**, dans le cas où la communication sans contact est traitée comme non admissible, l'appareil de lecture (1) rompt la communication avec l'unité transpondeur et/ou communique des données non authentiques à l'unité transpondeur et/ou émet une alarme et/ou empêche une action couplée à la communication avec l'unité transpondeur.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006000446 A1
- DE 102004057266 A1
- WO 03069538 A1
- US 2004256460 A
- US 20050212673 A
- EP 2105862 A
- EP 1901202 A2